(19) Europäisches Patentamt
European Patent Office
Office européen des brevets

(11) **EP 3 391 565 B1**

(12) **EUROPEAN PATENT SPECIFICATION**

(45) Date of publication and mention
of the grant of the patent:
**15.12.2021 Bulletin 2021/50**

(21) Application number: **16819510.5**

(22) Date of filing: **16.12.2016**

(51) Int Cl.:
*H04L 1/00* (2006.01)     *H04L 1/18* (2006.01)

(86) International application number:
**PCT/EP2016/081340**

(87) International publication number:
**WO 2017/103044 (22.06.2017 Gazette 2017/25)**

(54) **METHOD FOR MULTICASTING A PLURALITY OF DATA PACKETS TO A PLURALITY OF RECEIVERS**

VERFAHREN ZUR MEHRFACHSENDUNG EINER VIELZAHL VON DATENPAKETEN AN MEHRERE EMPFÄNGER

PROCÉDÉ POUR LA MULTIDIFFUSION D'UNE PLURALITÉ DE PAQUETS DE DONNÉES À UNE PLURALITÉ DE RÉCEPTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2015 EP 15200811**

(43) Date of publication of application:
**24.10.2018 Bulletin 2018/43**

(73) Proprietors:
• **Koninklijke KPN N.V.**
**3072 AP Rotterdam (NL)**
• **University Of Twente**
**7500 AE Enschede (NL)**

(72) Inventors:
• **SERBETCI, Berksan**
**7521 DJ Enschede (NL)**
• **GOSELING, Jasper**
**7512 DV Enschede (NL)**

(74) Representative: **Wuyts, Koenraad Maria**
**Koninklijke KPN N.V.**
**Intellectual Property Group**
**P.O. Box 25110**
**3001 HC Rotterdam (NL)**

(56) References cited:
**WO-A2-2009/131979     US-B1- 6 278 716**

• **TRAN THAI TUAN ET AL: "Joint on-the-fly network coding/video quality adaptation for real-time delivery", SIGNAL PROCESSING. IMAGE COMMUNICATION, vol. 29, no. 4, 6 March 2014 (2014-03-06), pages 449-461, XP028844364, ISSN: 0923-5965, DOI: 10.1016/J.IMAGE.2014.02.003**
• **CHRISTOS BOURAS ET AL: "Enhancing reliable mobile multicasting with RaptorQ FEC", COMPUTERS AND COMMUNICATIONS (ISCC), 2012 IEEE SYMPOSIUM ON, IEEE, 1 July 2012 (2012-07-01), pages 82-87, XP032209083, DOI: 10.1109/ISCC.2012.6249272 ISBN: 978-1-4673-2712-1**

**Description**

FIELD OF THE INVENTION

The invention relates to a method for multicasting a plurality of data packets to a plurality of receivers in a cell of a cellular communications system.

BACKGROUND

Recent developments in 3GPP standardization relate to Long Term Evolution (LTE) and Long Term Evolution Advanced (LTE Advanced) telecommunications networks and devices. LTE and LTE Advanced, also known as the 4G (i.e. fourth generation) mobile communications standard, is a standard for wireless communication of high-speed data for mobile phones and data terminals. It is a successor of GSM/EDGE (also known as 2G or 2.5G) and UMTS/HSPA (also known as 3G) network technologies, increasing the capacity and speed using a different radio interface together with evolutions and improvements in the radio access network and the core network.

Single-Cell Point-to-Multipoint Transmission (SC-PTM) is a transmission technique currently under development in 3GPP standardization. The main idea in SC-PTM is that in some situations it is beneficial to be able to multicast the data packets in one cell from one base station to multiple receivers that are connected to a cell of the base station. Examples of such a situation include multicasting a specific software update to receivers in the cell, group voice call among mobile phones in the cell, sharing video or data files amongst a group of receivers in the cell, etc.

Some proposals in 3GPP standardization specify that, in SC-PTM scenarios, the UEs receiving and having received the multicast data packets may provide feedback to the base station. One such proposal is 3GPP TSG-RAN WG2 #89bis, R2-151395, titled "Comparison of Unicast and SC-PTM on radio efficiency". The proposed feedback may involve channel state information that may be used by the base station to adapt the modulation and coding scheme (MCS) of the transmitted multicast data packets. Furthermore, the UE feedback may involve positive acknowledgements (ACKs) and negative acknowledgements (NACKs) relating to the successful respectively unsuccessful receipt of the data packets from the multicast by each of the receivers in the cell. The base station retransmits the data packets to the particular receivers for which NACKs have been received as feedback as a unicast. Such data packets being transmitted after the multicast data packets may be referred to as repair data packets.

One way to reduce the amount of repair data packets is to initially send redundant data from the base station to the receivers in the cell, based on which a receiver can calculate a missing data packet if needed, which may dismiss the need for resending the missing packet.

US 6,278,716 discloses a method for multicasting blocks of data to a plurality of receivers, the blocks including a first block and a second block, the first block comprising $k1 \geq 1$ data packets, the transmission of the first block comprising an initial transmission of the $k1$ data packets and $h1 \geq 0$ repair packets and one or more subsequent transmissions of additional repair packets in response to repair requests. Any $k1$ of the data packets and repair packets provide sufficient information to recover the $k1$ data packets. A second block is multicast comprising $k2 \geq 1$ data packets, the transmission of the second block comprising an initial transmission of the $k2$ data packets and $h2 \geq 0$ repair packets, wherein any $k2$ of the data packets and the repair packets of the second block provide sufficient information to recover the $k2$ data packets of the second block. Either or both $k2$ and $h2$ differ from $k1$ and $h1$, respectively. The number $h2$ of repair packets may be calculated based on a history of repair requests received for previously transmitted blocks.

A disadvantage of this method is that the execution may require a large amount of computational resources. Hence, it is an object of the present disclosure to describe a computationally less complex multicast transmission method.

TUAN TRAN THAI ET AL: "Joint On-the-Fly Network Coding/Video Quality Adaptation for Real-Time Delivery" discloses a redundancy adaptation algorithm for an on-the-fly erasure network coding scheme called "Tetrys" in the context of real-time video transmission. The algorithm exploits the relationship between the redundancy ratio used by Tetrys and the gain or loss in encoding bit rate from changing a video quality parameter called the Quantization Parameter (QP).

WO 2009/131979 discloses systems and methods for encoding block data to deliver content to a mobile wireless or other device. Content, such as audio, video or textual content, can be generated for broadcast in source blocks that are decomposed into a set of high priority blocks and a set of low priority blocks. Forward error correction is performed on the set of high priority blocks and set of low priority blocks to generate a set of repair symbols for use in reconstructing aggregate transmission blocks of content. The set of low priority blocks and set of repair symbols for a subsequent period can be shifted or inserted into an aggregate transmission block of a prior period. When a request to change channels is received, the decoding of the high priority block corresponding to the content of the new channel can begin before subsequent aggregate transmission blocks are received.

SUMMARY

To that end, in one aspect, the present disclosure presents a method for multicasting a plurality of original data packets to a plurality of receivers as defined in independent claim 1.

Another aspect of the disclosure pertains to a transmission node as defined in independent claim 8.

It should be noted that multiple sets of original data packets should normally be transmitted to provide the complete data to the receivers, such that a set of original data packets amounts to a subset of the complete data. One single network coded data packet may be added to the multicast for each subset of the complete data to be provided to the receivers.

The applicant has realized that sending more than one network coded data packet together with a set of original data packets tremendously increases the computational complexity. Each additional network coded data packet needs to be calculated separately and signalling is required to specify the linear combinations of the network coded data packets. Furthermore, the receipt of multiple network coded data packets requires the receiver to perform many computations to recover the original data packets.

In the disclosed method only one single network coded data packet is multicast with the set of original data packets to the plurality of receivers in the cell, thereby reducing the computational load on resources in both the base station and the receivers. The original data packets are not network coded and may be multicast in an unacknowledged mode.

The disclosed method and transmission node provide multicast flexibility in the sense that the set of original data packets can be adapted to different data packet loss probabilities. This flexibility is achieved by e.g. determining the number of original data packets in the set of original data packets in dependence on the data packet loss probability. The set size, i.e. the number of original data packets, is selected such that all original data packets can be obtained at the plurality of receivers with a certain probability (either with or without needing the network coded data packet that was multicast with the original data packets) from the multicast without requiring repair packets to be transmitted. Whereas the network coded data packet is data packet that is sent proactively, the repair packet (if necessary) is sent in response to an indication from a receiver to obtain data packets missing from the set.

If, for example, the multicast data packet loss probability in the cell is relatively high, the set of original data packets may comprise relatively few original data packets in order to maintain a certain probability that the receivers can decode all data packets from the set of original data packets without requiring repair packets. In the opposite case wherein multicast data packet loss probability in the cell is relatively low, the set of original data packets may comprise relatively many original data packets in order to achieve high and efficient transmission rates and a certain probability that repair packets are not required. Note that in both of the above examples one single network coded data packet is multicast together with the set of original data packets, yielding a relatively low computational burden.

Accordingly, the disclosed proposal results in enabling a transmission node to optimally balance the amount of downlink unicast traffic (repair packets) and the resources spent in the multicast downlink direction.

The multicast data loss probability in the cell can be derived from the individual data loss probability at the multicast receivers defined as the ratio between the number of incorrect multicast packets and the total number of multicast packets received at a particular receiver served in the given cell. This ratio can be evaluated for the individual multicast receivers e.g. within a particular time interval, from the beginning of the multicast session, after receiving a certain total number of multicast packets etc. Then, from these individual data loss probabilities per multicast receiver the overall cell multicast data loss probability can be derived as e.g. the worst case multicast data loss probability among all of the multicast receivers in the given cell, or an average of the multicast receivers in the given cell, or as percentile from the individual multicast data loss probabilities. Note that the individual multicast data loss probabilities per multicast receiver in the cell can be calculated at the multicast transmitter side (e.g. based on the received NACKs and ACKs or requests for repair packets at the end of the multi-cast data session) or calculated at the individual multicast receivers and reported back to the multicast transmitter.

It should be noted that the multicast data packet loss probability may also comprise a measure or estimate linked to the multicast data packet loss.

The multicast transmitter may provide the size of the multicast data set via signalling information on the multicast control channels in the cell.

The network coded data packet may be generated at the transmission node (e.g. a base station) or in an entity in or connected to the telecommunications network.

A network coded data packet is understood here to be a coded data packet containing a combination of (parts of) the original data packets from which an original data packet can be resolved at the receiver. Hereinafter, a specific example of a network coded data packet will be discussed, but it should be appreciated that other forms of coded data packets (e.g. Reed-Solomon coded data packets) may be applied.

It should be noted that the network coded data packet is a linear combination of at least two or more (parts of) original data packets of the set of original data packets. This may be particularly advantageous in situations wherein not every original data packet in the set of original data packets must be received by the receivers. In an example, it could be that the set of original data packets consists of ten original data packets and that at least the first two original data packets must be received by the receiver. The network coded data packet then only needs to be a linear combination of the first two data packets. Unequal error protection, wherein only some original data packets are protected, may be beneficial for certain applications, e.g. multiresolution video.

Network coding comprises making a linear combination of (at least the payload of) two or more data packets (e.g. via a bit-wise XOR operation of the two or more data packets), resulting in a network coded data packet. A single network-coded data packet thus represents a single linear combination of the two or more data packets. Note that different linear combinations, and thus different network coded data packets, may be made from a same set of two or more data packets. Also, a linear combination of the two or more data packets of a given (same) size may result in a network-coded data packet of that given size. Overhead information (e.g. overhead bits) may additionally be included to indicate or signal the linear combination made in producing the network coded data packet.

In general, a network coded packet C can be expressed as a linear combination of two or more original data packets P:

$$C = a_1P_1 + a_2P_2 + a_3P_3 + ...$$

Network coded data packets C are different if the linear combinations are different, i.e. if either the coding coefficients are different or the involved data packets P are different. Preferably, the vectors of coding coefficients of two or more network coded data packets C are linearly independent. This facilitates resolving the original data packets P from the network coded data packets C at e.g. a receiver.

By applying network decoding on a sufficient number of different network coded data packets C, the data packets P comprised in the linear combinations represented in the network coded data packets may be resolved.

In this disclosure, a data packet may comprise any block (e.g. an integer number of bits or bytes) of payload data. A data packet typically also has additional overhead (bits or bytes), e.g. header and/or trailer bits, for the purpose of transporting the payload data. Examples of overhead comprise an indication of the data packet (e.g. a packet sequence number) and/or payload destination, of a (logical) channel, of a data packet and/or a payload length and/or an error check (e.g. CRC). A data packet in this disclosure thus comprises e.g. an Internet Protocol (IPv4, IPv6) datagram, possibly with additional overhead such as GTP overhead for tunnelling the IP packet through part of the telecommunications network (e.g. from a gateway (S-GW) to a base station (eNB)), an RLC PDU and a Transport Block as e.g. used on a wireless (radio) connection between a base station (eNB) and a user device (UE).

Performing network coding on two or more data packets is to be understood as performing network coding on at least the payload data in each of the two or more data packets, and not necessarily on overhead bits or bytes in these data packets.

In one embodiment, the network coded data packet is a linear combination of the data packets in the set of original data packets, such as a bitwise XOR combination of each of the bits of each of the data packets. The network coded data packet enables a receiver to calculate any missing original data packet from the set as long as it is the only missing data packet in the set of original data packets. This embodiment is advantageous in situations wherein each data packet in the set of original data packets must be properly received by the receiver.

In one embodiment, the method and the transmission node are arranged for determining the number of original data packets in the set of original data packets in a base station (e.g. an eNodeB) of the cellular communications system based on the multicast data packet loss probability. The embodiment provides an advantageous location for flexibly determining the data loss probability in the cell and the number of original data packets in the set that depends on the determined multicast data loss probability.

In one embodiment the method and the transmission node are arranged for multicasting the network coded data packet using a modulation and coding rate lower than the modulation and coding rate used for multicasting the original data packets of the set. It should be appreciated that the modulation and coding rate may be dependent on the multicast data packet loss probability. This embodiment is advantageous because it enables increasing the probability of successful reception of the network coded data packet at the receivers, without decreasing the transmission efficiency and transmission rate of the original data packets. When the network coded data packet is successfully received, any single missing original data packet can be resolved, provided that original data packet was used in the generation of the network coded data packet.

In one embodiment the method and transmission node are arranged for receiving information from one or more receivers of the plurality of receivers and dynamically determining the multicast data packet loss probability for at least one set of original data packets to be multicast to the plurality of receivers on the basis of the received information. The embodiment is advantageous because it allows for dynamically determining the number of original data packets in the at least one set of original data packets to be multicast, such that the need for repair packets is minimized. The embodiment enables that a set of original data packets always has an optimal number of original data packets given a current multicast data packet loss probability.

In one embodiment the information from the one or more receivers relates to at least one of (a) information received from the one or more receivers resulting from multicasting data packets of a previous set of original data packets and (b) information received from the one or more receivers resulting from other connections of the one or more receivers with a base station defining the cell. The information received from the one or more receivers resulting from multicasting data packets of a previous set of original data packets may comprise indications for missing original data packets of the previous set. If a high number of missing data packets in the previous set of original data packets was detected, the base station may determine that the multicast data loss probability in the cell has increased and that, consequently, the number of original data packets in the next set should be reduced to reduce the number of or even avoid repair packets for this next set. Information of the receivers relating to other connections in the cell existing in parallel to the multicast may also be used to determine the multicast data packet loss probability.

In the latter case wherein the receiver has active unicast sessions in parallel with the multicast, this unicast session can be used for deriving the multicast data loss probability as follows. First, for the active unicast data session one or more of the following information can be obtained: (i) the data loss probability can be measured from e.g. received ACKs and/or NACKs messages regarding the reception of unicast data, (ii) The unicast radio conditions can be measured in terms of e.g. received signal level, interference level, SINR, path-loss, etc. and (iii) the properties of the unicast transmission mode between the transmitter and the receiver such as e.g. transmit power, modulation and coding scheme, MIMO transmission mode etc. can be determined. Second, the multicast session will most likely have different transmission properties than the unicast transmission properties as under iii). However, based on off-line experiments, simulations, etc. a translation table can be made regarding the offset in the data loss probability between a given multicast and a given unicast transmission mode for a range of radio conditions as in ii) above. Finally, the multicast data loss probability for the given receiver can be derived by applying the pre-defined offset (e.g. from the off-line translation tables) to the measured unicast data loss probability as in i) above and based on the unicast radio conditions as measured in ii) above by either assuming that the same radio conditions apply or correcting the radio connection based on the knowledge of the radio conditions of the multicast connection.

In one disclosed embodiment, the method and the transmission node are arranged for receiving information comprising k-1 indications for k missing original data packets of the set of original data packets at a receiver of the plurality of receivers after multicasting the original data packets and the single network coded data packet to the plurality of receivers. As a result of proactively transmitting the network coded data packet with the multicast, negative acknowledgments occur less frequently since, from the network coded data packet, an arbitrary original data packet can be derived (if the network coded data packet is defined as a combination of all original data packets from the set and the repair packets relating to the k-1 indications are received by the receiver).

In one disclosed embodiment, the method and the transmission node are arranged for transmitting to the receiver of the plurality of receivers:

- k-1 original data packets corresponding to the missing k data packets in the set of original data packets, wherein the k-1 indications contain information regarding the missing original data packets;
- k-1 network coded data packets.

The embodiment facilitates obtaining the missing original data packets if, despite defining the set size in dependence of the multicast data packet loss probability, original data packets are still missing at receiver. In that case, the k-1 indications may comprise information from which the transmission node may derive which original data packets are missing and then transmit (e.g. unicast) repair packets associated with the k-1 indications to the receiver from which the indication(s) are obtained. Another option is that the transmission node transmits one or more network coded data packets as repair packets, containing linear combinations of all original data packets of the set, to the receiver, thereby avoiding the need for the transmission node to know which original data packets are missing from the multicast set. Advantageously, the network coded data packet(s) that are transmitted as repair packets comprise linear combination(s) of the original data packets different from the combination used for the single network coded data packet that was proactively sent with the set of original data packets.

One particularly advantageous embodiment comprises multicasting the network coded data packet(s) that are sent as repair packets. In that case, each receiver can resolve an arbitrary original missing data packet from the repair packet such that the transmitter does not need to know exactly which receiver misses which data packet.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures.

For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

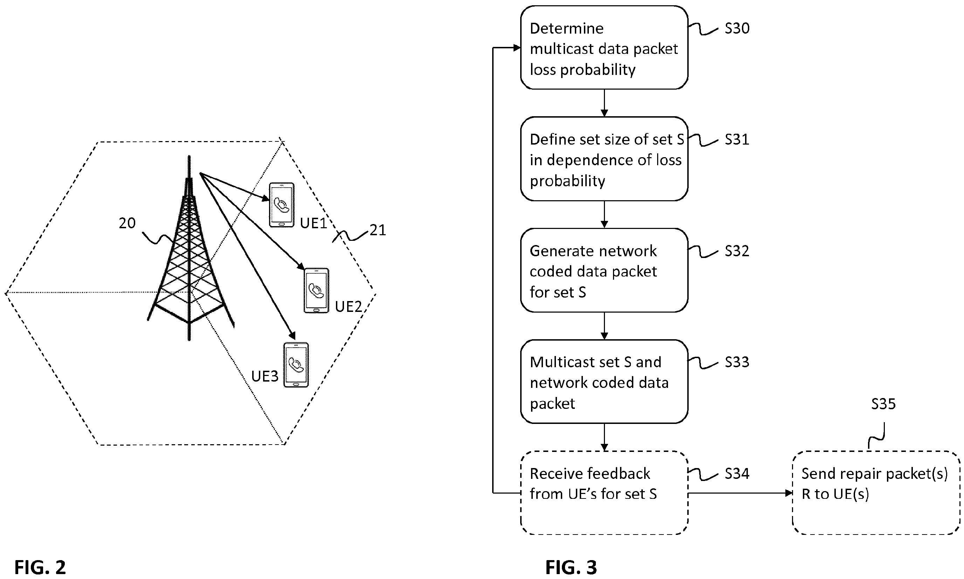

The invention is defined by the appended independent claims 1, 8, 15. Further details are provided by the dependent claims. All embodiments other than figure 3 do not fall under the scope of the claims (but are considered to be useful for highlighting specific aspects of the claims).

BRIEF DESCRIPTION OF THE DRAWINGS

Aspects of the invention will be explained in greater detail by reference to exemplary embodiments shown in the drawings, in which:

    FIG. 1 is a schematic illustration of three generations of telecommunications networks;
    FIG. 2 is a schematic illustration of a transmission node defining a cell for a plurality of receivers according to a disclosed embodiment;
    FIG. 3 is a flow chart indicating some steps taken at the transmission node of FIG. 2 according to a disclosed embodiment;
    FIG. 4 is a schematic time line of a multicast of a set of original data packets and a network coded data packet and the receipt thereof by a receiver according to disclosed embodiment;
    FIGS. 5 and 6 are time diagrams indicating a sequence of steps for multicasting multiple sets of original data packets;
    Fig. 7 is a schematic block diagram of a general system (e.g. a base station or a receiver) to be employed in the disclosed multicasting method.

DETAILED DESCRIPTION OF THE DRAWINGS

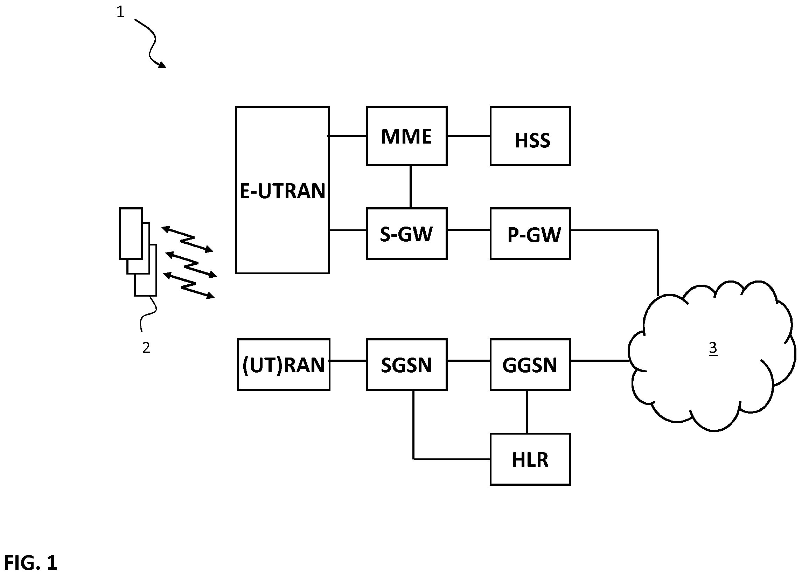

FIG. 1 shows a schematic illustration of a cellular telecommunications system 1. The telecommunications system 1 comprises a cellular radio access network system (also indicated as E-UTRAN or (UT)RAN in FIG. 1) and a core network system containing various elements or nodes as described in further detail below.

In the telecommunications system of FIG. 1, three generations of networks are schematically depicted together for purposes of brevity. A more detailed description of the architecture and overview can be found in 3GPP Technical Specification TS 23.002 'Network Architecture' which is included in the present application by reference in its entirety.

The lower branch of FIG. 1 represents a GSM/GPRS or UMTS network.

For a GSM/GPRS network, a radio access network (RAN) system comprises a plurality of transmission nodes, including base stations (combination of a BSC and a BTS), not shown individually in FIG. 1. The core network system comprises a Gateway GPRS Support Node (GGSN), a Serving GPRS Support Node (SGSN, for GPRS) or Mobile Switching Centre (MSC, for GSM, not shown in FIG. 1) and a Home Location Register (HLR). The HLR contains subscription information for receivers 2, e.g. mobile stations MS.

For a UMTS radio access network (UTRAN), the radio access network system also comprises a Radio Network Controller (RNC) connected to a plurality of base stations (NodeBs), also not shown individually in FIG. 1.

In the core network system, the GGSN and the SGSN/MSC are connected to the HLR that contains subscription information of the receivers 2, e.g. user equipment UE.

The upper branch of the telecommunications system in FIG. 1 represents a next generation network, commonly indicated as Long Term Evolution (LTE) system or Evolved Packet System (EPS).

The radio access network system, indicated as E-UTRAN, comprises transmission nodes (evolved NodeBs, eNodeBs or eNBs), not shown individually in FIG. 1, providing cellular wireless access for a receiver 2, e.g. a user equipment UE. The core network system comprises a PDN Gateway (P-GW) and a Serving Gateway (S-GW). The E-UTRAN of the EPS is connected to the S-GW via a packet network. The S-GW is connected to a Home Subscriber Server HSS and a Mobility Management Entity MME for signalling purposes. The HSS includes a subscription profile repository SPR for receivers 2.

For GPRS, UMTS and LTE systems, the core network system is generally connected to a further packet network 3, e.g. the internet.

Further information of the general architecture of a EPS network can be found in 3GPP Technical Specification TS 23.401 'GPRS enhancements for Evolved Universal Terrestrial Radio Access Network (E-UTRAN) access'.

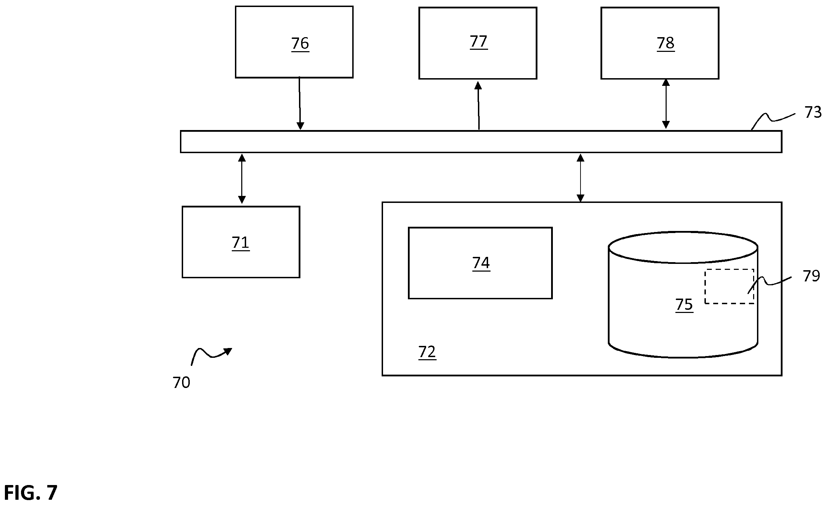

FIG. 2 is a schematic illustration of a transmission node 20, e.g. a base station, in a telecommunications network 1 as depicted in FIG. 1. The base station 20 comprises a computer system and a transmitter/receiver. Details of the base station are shown in FIG. 7.

The base station 20 defines a plurality of cells C. Three user equipment devices UE1, UE2 and UE3 are shown in a cell 21.

Telecommunications network 1 may have data for the UEs. Base station 20 provides the data to the UEs using Single Cell Point To Multipoint Transmission (SC-PTM). The data may relate to various types of services, e.g. voice, video or file transfer. SC-PTM provides the data packets to the UEs using multicast transmission. The multicast transmission is shown by the arrows from the base station 20 to UE1, UE2 and UE3. It should be appreciated that cell 21 may contain more UEs and that base station 20 may perform the same or a different SC-PTM in other cells.

FIG. 3 depicts a flow chart showing steps in telecommunications network 1 of a method for multicasting a plurality of data packets to a plurality of receivers (e.g. UE1, UE2 and UE3), using SC-PTM. In one embodiment, one or more of the steps are performed by the base station 2 of FIG. 2.

Step S30 pertains to determining a multicast data packet loss probability in the cell 21 containing UE1, UE2 and UE3. The estimate is a measure that relates to the amount of data packets that are not received correctly by the UEs in a multicast transmission. The multicast data packet loss probability is preferably a dynamically determined measure to account for varying conditions in the cell. The estimate may be obtained from direct feedback regarding (in)correctly received data packets from the multicast transmission and/or information received via other connections of UE1, UE2 and UE3 with the base station in the cell 21. These connections preferably exist in parallel to the multicast transmission disclosed herein such that the received information enables a sufficiently accurate determination of the multicast data packet loss probability.

As will be discussed in further detail below, the multicast method entails transmitting the complete data (a plurality of data packets) in sets of data packets. The information used to enable the base station 20 to dynamically determine the multicast data packet loss probability may be obtained from error messages that have been received for a set of original data packets multicast prior to the current set. This is shown in step S34. For example, the number of NACK messages received from the plurality of user equipment devices UE1, UE2, UE3 may be a measure of the multicast data packet loss probability.

In step S31, a set S of original data packets P is defined, wherein the number of original data packets P in the set S is selected in dependence of the multicast data packet loss probability determined in step S30. The set S contains at least two data packets P.

In step S32, a network coded data packet C is generated based on at least two of the original data packets P of the set S. The network coded data packet C is a linear combination of the at least two data packets P, and amounts to e.g. a bitwise XOR combination of each of the bits of the original data packets P. Other types of coded packets, such as Reed-Solomon coded data packets, may also be applied.

In step S33, the set of original data packets P and the single network coded data packet C are multicast to UE1, UE2 and UE3 in the cell 21. The network coded data packet C is transmitted proactively with the original data packets P of the set S. A UE having received all but one original data packet from the set S may resolve the missing original data packet P using the network coded data packet C and the correctly received original data packets P. The missing original data packet may be an arbitrary data packet P of the set S if the network coded data packet C is a linear combination of original data packets P including the missing original data packet P.

It will be appreciated that, assuming that the multicast data packet loss probability has been determined sufficiently accurate for the current multicast, the probability that more than one original data packet P of the set S will not be received should be reasonably small. If, for example, the multicast data packet loss probability in the cell 21 is relatively high, the set S of data packets may comprise relatively few original data packets P to maintain a certain probability that the user equipment devices UE1, UE2, UE3 can decode all data packets from the set S of data packets. In the opposite case wherein multicast data packet loss probability in the cell 21 is relatively low, the set S may comprise relatively many original data packets P to achieve high and efficient transmission rates while still achieving high probability that all original data packets P of the set S can be obtained at the user equipment devices UE1, UE2, UE3. Note that in both of the above examples one single network coded data packet C is multicast together with the set of original data packets P, yielding a relatively low computational burden.

Chances that the single network coded data packet C can be correctly decoded by the user equipment devices UE1, UE2 and UE3 should be optimized. To that end, base station 20 transmits the network coded data packet C in a more robust manner than the original data packets P of the set S of data packets. In particular, the base station 20 selects a modulation and coding scheme MCS for the network coded data packet C that is different from the MCS used for the transmission of the original data packets P. The modulation and coding rate is set lower for the network coded data packet to increase the probability that the network coded data packet C can be received correctly at each of the user equipment devices involved in the multicast. When the network coded data packet C is successfully received, any single missing original data packet P can be resolved, provided that original data packet P was used in the generation of the network coded data packet C.

It should be noted that the network coded data packet C need not be a linear combination of all original data packets P in the set S. For some cases, the network coded data packet C only needs to be a linear combination of some original network coded data packets, the correct detection of which is more important than for other original data packets P within the set S. Unequal error protection, wherein only some original data packets are protected, may be beneficial for certain applications, e.g. multiresolution video.

Step S34 indicates feedback information received by base station 20 from one or more user equipment devices involved in the multicast transmission. Step S34 may be optional. Feedback information is received from user equipment device that, despite the availability of the network coded data packet C, could not resolve all original data packets P from the set S. For example, a user equipment may not have received two or more original data packets P from the set S. The feedback information may or may not indicate which original data packet(s) P of the set S are still missing. Again, if only one original data packet P of the set S is missing, no feedback information is received by the base station 20, thereby saving radio resources.

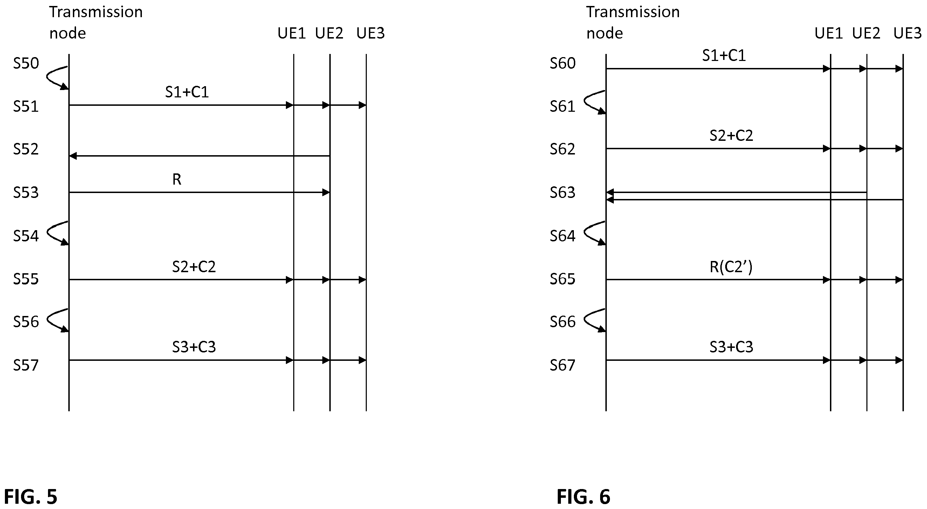

Step S35 indicates the optional step of transmitting one or more repair packets R from the base station 20 to one or more of the user equipment devices in response to receiving the feedback information of step S34. Repair packets R may not be needed if the service does not require that all original data packets P are obtained by the user equipment devices, such as e.g. voice services or video services. Repair packets R may either be unicast to a selected user equipment device or be multicast to two or more (e.g. all) user equipment devices of the plurality of user devices to which the set S of original data packets P was transmitted. These options will be discussed in further detail with reference to FIGS. 5 and 6.

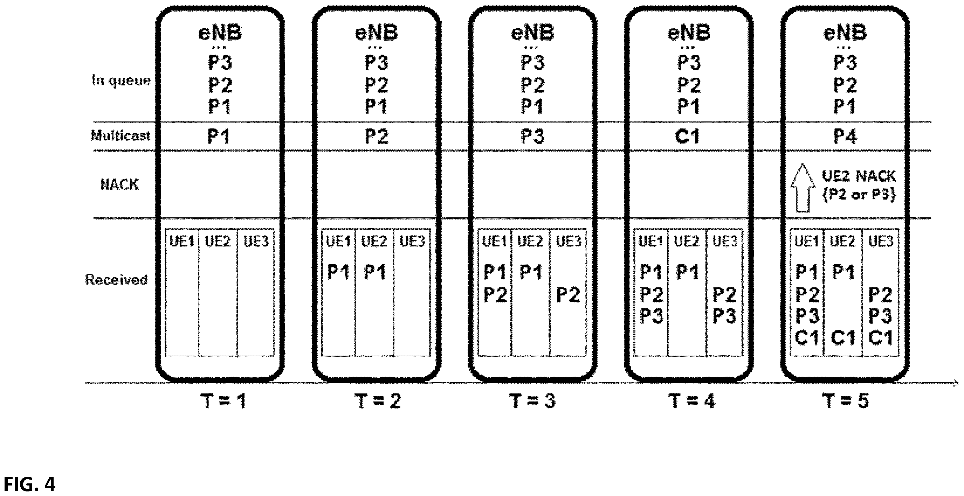

FIG. 4 is a schematic time line of a multicast of a set of original data packets and a network coded data packet and the receipt thereof by a receiver according to disclosed embodiment. In FIG. 4, it is assumed that the set size S is defined to consist of three original data packets P1, P2 and P3 in accordance with a mulicast data packet loss probability. The original data packets are multicast from an eNB to three UEs (UE1, UE2 and UE3) in the cell of the eNB. A network coded data packet C is generated, wherein C=P1+P2+P3. The multicast of original data packets P1 results in data packet P1 being received by UE1 and UE2 at T=2, but not by UE3. The multicast of original data packet P2 results in data packet P2 being received by U1 and U3 at T=3, but not by UE2. The multicast of original data packet P3 results in data packet P3 being received by UE1 and UE3 at T=4, but not by UE2. Changes in the receipt of original data packets P by the UEs arise from varying conditions on the radio path between the eNb and the UEs. Network coded data packet C may be generated at the eNB or may be received from other entities in or connected to the telecommunications network 1. The network coded data packet C is also multicast and received by all UEs (e.g. because a more robust transmission was selected at the eNb for the transmission of the network coded data packet C).

When processing the received transmissions in the UEs, network coded data packet C is useless for UE1, since UE1 has received all original data packets P1, P2 and P3 of the set. Accordingly, UE1 does not send any feedback to the eNb. UE3 could receive P2 and P3 via multicast and can resolve original data packet P1 from the network coded data packet C using P2 and P3. Hence, UE3 also does not need to send any feedback to the eNb. UE2 is missing more than one original data packet and, therefore it sends a NACK to the eNb with the information of which data packets are missing. It should be noted that in this case two original data packets are missing, but UE2 only needs to send one NACK containing information of missing only one of the packets P2 or P3. Then, the eNb will send either P2 or P3 via e.g. a unicast transmission to UE2 such that UE2 can resolve the other original data packet by using the network coded data packet C. If UE2 was missing all three original data packets P1, P2, P3 then its NACK feedback would have contained the information of at least two missing original data packets. Therefore, if a UE is missing k original data packets P after the end of a set S, the NACK message contains the information of k-1 missing original data packets. Original data packet X4 is an original data packet of a next set S of original data packets.

FIGS. 5 and 6 are time diagrams indicating a sequence of steps for multicasting multiple sets S of original data packets P from a transmission node (e.g. a base station) to the receivers UE1, UE2 and UE3.

Step S50 pertains to the determination of the mulicast data packet loss probability for the next multicast in step S51 of a set S1 of original data packets P. Step S50 may also contain the generation of a network coded data packet C1 being a linear combination of at least two of the original data packets P of the set S1.

In step S51, the original data packets P of set S1 and the network coded data packet C1 are multicast to UE1, UE2 and UE3. When processing the multicast transmission, UE 2 is assumed to find out that, even with the network coded data packet C1, it could not resolve all data packets P from the set S1.

Hence, in step S52, UE2 transmits an indication of one or more missing original data packets P from set S1 to the transmission node. The indication may contain information which original data packets P of set S1 could not be obtained. As mentioned with reference to FIG. 4, one less missing original data packet should be reported, provided that the network coded data packet C1 has been received correctly.

In step S53, the transmission node transmits (e.g. unicasts) one or more repair packets R1 corresponding to the missing original data packets reported to be missing in step S52. Once the missing original data packets arrive safely at UE2, UE2 can resolve all original data packets P from set S1, using the one or more repair packets R1, the network coded data packet C1 and the original data packets P (if any) received with the multicast in step S51.

In step S54, the transmission node determines the multicast data packet loss probability using the feedback information received in step S52. The newly determined multicast data packet loss probability may result in the transmission node deciding that the number of original data packets P in a set S2 to be transmitting should be reduced with respect to the number of original data packets P in set S1. Again, a network coded data packet C2 is generated as a linear combination of at least two original data packets P of set S2.

In step S55, the transmission node multicasts the original data packets P of set S2 and the network coded data packet C2 to the UEs. The transmission node does not receive any indications of missing original data packets P of set S2.

Then, e.g. after the expiry of a timer, the transmission node may again determine a multicast data packet loss probability for a new set S3 of data packets to be transmitted in step S56. For example, since all original data packets P of set S2 were received by the UEs, the transmission node may decide that set S3 should have the same size as set S2. Alternatively, the transmission node may increase the set size of S3 to increase the efficiency of the resource usage. Again, step S56 may also involve the generation of a network coded data pack-

et C3 as a linear combination of two or more original data packets P of set S3.

In step S57, the original data packets P of set S3 and the network coded data packets are multicast to the UEs.

It should be appreciated that some steps may be reversed and some steps may even be omitted from the sequence of FIG. 5. For example, the transmission of the repair packet(s) in step S53 may occur simultaneously with or after step S54 determining the set size S2 and the network coded data packet C.

As noted above, the steps S52 and S53 of receiving indications of missing packets and/or the transmission of repair packets may be omitted if the UEs do not necessarily need all data packets to be received. Some services, such as voice services or video services, do not require each and every original data packet P to be received by the UE. Another alternative is that step(s) like S52 are only used to determine the multicast data packet loss probability, but not to send repair packets as in step S53.

It should further be noted that it is not necessary to determine the multicast data packet loss probability each time a new set S is to be multicast to the UE's as is shown in FIG. 5. The frequency of determining the multicast data packet loss probability may be determined by the transmission node or may be set by the network. The determination of the data packet loss probability may follow the dynamics of the changing communication conditions at the receivers involved in the multi-cast transmission. For example, if the transmission node identifies that the multicast data packet loss probability is relatively constant then determination may be less frequent. If the transmission node determines that the multicast data packet loss probability varies outside a certain range, determination may be performed more frequently.

Referring now to FIG. 6, step S60 involves the multicast of a set S1 of data packets P, wherein the transmission node has made a very conservative estimate of the multicast data packet loss probability, and hence a small set size. Step S60 may, for example, relate to the multicast of the very first set of original data packets of the complete data to be transmitted. A network coded data packet C1 is also multicast.

In step S61, in the absence of any feedback from the UEs on missing data packets, a new, less conservative, set size is determined for set S2. Accordingly, set S2 is bigger than set S1. A network coded data packet C2 is also generated.

In step S62, the original data packets P of set S2 and the network coded data packet C2 are multicast to the UEs.

In step S63, both UE2 and UE3 provide feedback with an indication of missing original data packets P of set S2.

Determining that many UEs were not able to decode the original data packets, even with the assistance of the proactively provided network coded data packet C2, the transmission node may generate in step S64 a further network coded data packet C2' as a repair packet R. Network coded data packet C2' also is a linear combination of the original data packets P of the set S2. The linear combination used for network coded data packet C2' is different from the linear combination of network coded data packet C2. If the linear combinations for C2 and C2' are combinations over all original data packets P of the set S2, the network coded data packets C2 and C2' could be different in the coding coefficients a. In this case, assuming that each UE has indicated that is misses one original data packet P of set S2, the transmission node does not need to know exactly which original data packet P of set S2 is missing.

In step S65, the transmission node multicasts the network coded data packet C2' as a repair packet R to the UEs. For UE1, the network coded data packet C2' is useless since UE1 was already able to resolve all original data packets P of set S2, with our without the proactively multicast network coded data packet C2 in step S62. UE2 and UE3 may now resolve at least one more original data packet using the network coded data packets C2 and C2' and any original data packet P received with the multicast of step S62. If UE2 and/or UE3 still cannot resolve all original data packets P of the set S2, steps S63 and S64 may be repeated. In step S64, the missing data packets may then be provided again as a network coded data packet C2" (again a different linear combination from C2 and C2') or as the missing data packet P itself. It should be noted that the repair packets R comprising C2' and/or C2" may be multicast with the same MCS as the proactively multicast network coded data packet C2. It should be noted that the repair packet(s) R are not necessarily multicast to the UEs, but also be transmitted as a unicast to a dedicated UE.

In step S66, the multicast data packet loss probability is determined on the basis of the indications of missing data packets in step S63. Accordingly, the set size of the next set S3 of original data packets P may be reduced. Furthermore, a network coded data packet C3 is generated. In step S67, the original data packets P of set S3 and the network coded data packet are multicast to the UEs.

Using the proposed solution, the probability of a UE receiving all packets in a single set is increased from $(1 - p)^f$ to $(1 - p)^f + fp(1 - p)^{f-1}$ where p is the probability of a missing original data packet and f is the size of the set S. To illustrate, if an original data packet is received correctly with probability 0.9 and if the original data packets are divided into set of three original data packets (f=3), then probability of a UE receiving all original data packets correctly at once is increased from 72.9% to 97.2% at the cost of sending one network coded packet with each set.

FIG. 7 is a block diagram illustrating an exemplary data processing system that may be used as a part of a transmission node as shown in FIG. 2, such as base station.

Data processing system 70 may include at least one processor 71 coupled to memory elements 72 through a system bus 73. As such, the data processing system 70 may store program code within memory elements 72. Further, processor 71 may execute the program code accessed from memory elements 72 via system bus 73. In one aspect, data processing system 70 may be implemented as a computer that is suitable for storing and/or executing program code. It should be appreciated, however, that data processing system 70 may be implemented in the form of any system including a processor and memory that is capable of performing the functions described within this specification.

Memory elements 72 may include one or more physical memory devices such as, for example, local memory 74 and one or more bulk storage devices 75. Local memory may refer to random access memory or other non-persistent memory device(s) generally used during actual execution of the program code. A bulk storage device 75 may be implemented as a hard drive or other persistent data storage device. The data processing system 70 may also include one or more cache memories (not shown) that provide temporary storage of at least some program code in order to reduce the number of times program code must be retrieved from bulk storage device 75 during execution.

Input/output (I/O) devices depicted as input device 76 and output device 77 optionally can be coupled to the data processing system 70. Examples of input devices may include, but are not limited to, for example, a keyboard, a pointing device such as a mouse, a touchscreen, or the like. Examples of output device may include, but are not limited to, for example, a monitor or display, speakers, or the like. Input device 76 and/or output device 77 may be coupled to data processing system 70 either directly or through intervening I/O controllers. A network adapter 78 may also be coupled to data processing system 70 to enable it to become coupled to other systems, computer systems, remote network devices, and/or remote storage devices through intervening private or public networks. The network adapter 78 may comprise a data receiver for receiving data that is transmitted by said systems, devices and/or networks to said data processing system 70 and a data transmitter for transmitting data to said systems, devices and/or networks. Modems, cable modems, and Ethernet cards are examples of different types of network adapters that may be used with data processing system 70.

As pictured in FIG. 7, memory elements 72 may store an application 79. It should be appreciated that data processing system 70 may further execute an operating system (not shown) that can facilitate execution of the application. Applications, being implemented in the form of executable program code, can be executed by data processing system 70, e.g., by processor 71. Responsive to executing the application 79, the data processing system 70 may be configured to perform one or more operation as disclosed in the present application in further detail.

In one aspect, for example, data processing system 70 may represent a transmission node as shown in FIG. 2 or as a receiver. In that case, application 29 may represent a client application that, when executed, configures data processing system 70 to perform the various functions described herein with reference to transmission node or a receiver. An example of a transmission node includes a base station of a telecommunications network 1 providing cellular wireless access, e.g. a NodeB or an eNB. The user equipment can include, but is not limited to, a personal computer, a portable computer, a mobile phone, or the like.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

**Claims**

1. A method for multicasting a plurality of original data packets to a plurality of receivers (UE1, UE2, UE3) in a cell (21) of a cellular communications system, the method comprising the steps in the cellular communications system of:

    multicasting a set (S1, S2, S3) of original data packets and a single network coded data packet (C1, C2, C3) associated with the set of original data packets to the plurality of receivers in the cell,
    wherein the set of original data packets consists of a number of original data packets of the plurality of original data packets;
    wherein the number of original data packets in the set of original data packets is dependent on a multicast data packet loss probability for transmitting data packets to one or more of the plurality of receivers in the cell,
    wherein the single network coded data packet is a linear combination of two or more original data packets in the set of original data packets, and
    wherein the network coded data packet is multicast using a modulation and coding rate lower than the modulation and coding rate used for multicasting the set of original data packets.

2. The method according to claim 1, wherein the single network coded data packet is a linear combination of the original data packets in the set of original data packets, such as a bitwise XOR combination of each of the bits of each of the original data packets.

3. The method according to claim 1 or claim 2, further comprising the step of determining the number of original data packets in the set of original data packets in a base station of the cellular communications system based on the data packet loss probability.

4. The method according to one or more of the preceding claims, comprising the step of receiving information from one or more receivers of the plurality of receivers and dynamically determining the multicast data packet loss probability for at least one set of original data packets to be multicast to the plurality of receivers on the basis of the received information.

5. The method according to claim 4, wherein the information from the one or more receivers relates to at least one of:

    - information received from the one or more receivers resulting from multicasting data packets of a previous set of original data packets; and
    - information received from the one or more receivers resulting from other connections of the one or more receivers with a base station defining the cell.

6. The method according to one or more of the preceding claims, further comprising the step of receiving information comprising k-1 indications for k missing original data packets of the set of original data packets at a receiver of the plurality of receivers after multicasting the original data packets and the single network coded data packet to the plurality of receivers.

7. The method according to claim 6, further comprising at least one of the steps of transmitting to the receiver of the plurality of receivers:

    - k-1 original data packets corresponding to the missing k data packets in the set of original data packets, wherein the k-1 indications contain information regarding the missing original data packets;
    - k-1 network coded data packets, that, optionally, are multicast to the plurality of receivers.

8. A transmission node (20) for a communications system, defining a cell (21) of a cellular communications system, the transmission node being configured to multicast a plurality of original data packets to a plurality of receivers (UE1, UE2, UE3) in the cell, the transmission node comprising:

    a processor configured for defining a set of original data packets and a single network coded data packet to be multicast to the plurality of receivers in the cell,
    a transmitter configured for multicasting the set of original data packets and the single network coded data packet to the plurality of receivers in the cell;
    wherein the set of original data packets consists of a number of original data packets of the plurality of original data packets,

wherein the number of original data packets in the set of original data packets is dependent on a multicast data packet loss probability for transmitting data packets to one or more of the plurality of receivers in the cell,

wherein the single network coded data packet is a linear combination of two or more original data packets in the set of original data packets, and

wherein the transmission node is configured to multicast the single network coded data packet using a modulation and coding rate lower than the modulation and coding rate used for multicasting the set of original data packets.

9. The transmission node according to claim 8, wherein the single network coded data packet is a linear combination of the original data packets in the set of original data packets, such as a bitwise XOR combination of each of the bits of each of the original data packets.

10. The transmission node according to claim 8 or 9, wherein the transmission node is a base station defining the cell of the cellular communications system and wherein the processor is configured for determining the number of original data packets in the set of original data packets in a base station of the cellular communications system based on the multicast data packet loss probability.

11. The transmission node according to one or more of the preceding claims 8-10, wherein the transmission node comprises a receiver configured to receive information from one or more receivers of the plurality of receivers and wherein the processor is configured to dynamically determine the multicast data packet loss probability for at least one set of original data packets to be multicast to the plurality of receivers on the basis of the received information.

12. The transmission node according to claim 11, wherein the information from the one or more receivers relates to at least one of:

    - information received from the one or more receivers resulting from multicasting data packets of a previous set of original data packets; and
    - information received from the one or more receivers resulting from other connections of the one or more receivers with a base station defining the cell.

13. The transmission node according to one or more of the preceding claims 8-12, wherein the processor is configured to process information comprising k-1 indications for k missing original data packets of the set of original data packets at a receiver of the plurality of receivers after multicasting the original data packets and the single network coded data packet to the plurality of receivers.

14. The transmission node according to claim 13, wherein the processor is configured to determine at least one of:

    - k-1 original data packets corresponding to the missing k data packets in the set of original data packets, wherein the k-1 indications contain information regarding the missing original data packets;
    - k-1 network coded data packets;

    and wherein the transmission node is configured to transmit at least one of the k-1 original data packets or the k-1 network coded data packets, optionally as a multicast, to the receiver.

15. A computer program or suite of computer programs comprising instructions or a computer program product storing instructions which, when the program or the suite of computer programs are executed by a computer system, cause the computer system to carry out the method according to one or more of the claims 1-8.

**Patentansprüche**

1. Verfahren zum Verbreiten mehrerer ursprünglicher Datenpakete zu mehreren Empfängern (UE1, UE2, UE3) in einer Zelle (21) eines Mobilkommunikationssystems, wobei das Verfahren die folgenden Schritte im Mobilkommunikationssystem umfasst:

    Verbreiten eines Satzes (S1, S2, S3) ursprünglicher Datenpakete und eines einzelnen netzcodierten Datenpakets (C1, C2, C3), das dem Satz ursprünglicher Datenpakete zugeordnet ist, zu den mehreren Empfängern in der Zelle, wobei der Satz ursprünglicher Datenpakete aus einer Anzahl ursprünglicher Datenpakete der mehreren ursprünglichen Datenpakete besteht; die Anzahl ursprünglicher Datenpakete im Satz ursprünglicher Datenpakete von einer Mehrzielverbreitungs-Datenpaketverlustwahrscheinlichkeit zum Senden von Datenpaketen zu einem oder mehreren der mehreren Empfänger in der Zelle abhängt, das einzelne netzcodierte Datenpaket eine Linearkombination von zwei oder mehr ursprünglichen Datenpaketen im Satz ursprünglicher Datenpakete ist und das netzcodierte Datenpaket unter Verwendung einer Modulations- und Codierungsrate, die kleiner als die Modulations- und Codierungsrate, die zum Verbreiten zu mehreren Zielen des Satzes ursprünglicher Datenpakete verwendet wird, zu mehreren Zielen verbreitet wird.

2. Verfahren nach Anspruch 1, wobei das einzelne netzcodierte Datenpaket eine Linearkombination der ursprünglichen Datenpakete im Satz ursprünglicher Datenpakete wie z. B. eine bitweise exklusive ODER-Kombination sämtlicher Bits sämtlicher ursprünglicher Datenpakete ist.

3. Verfahren nach Anspruch 1 oder Anspruch 2, das ferner den Schritt des Bestimmens der Anzahl ursprünglicher Datenpakete im Satz ursprünglicher Datenpakete in einer Basisstation des Mobilkommunikationssystems auf der Grundlage der Datenpaketverlustwahrscheinlichkeit umfasst.

4. Verfahren nach einem oder mehreren der vorhergehenden Ansprüche, das den Schritt des Empfangens von Informationen von einem oder mehreren Empfängern der mehreren Empfänger und eines dynamischen Bestimmens der Mehrzielverbreitungs-Datenpaketverlustwahrscheinlichkeit für mindestens einen Satz ursprünglicher Datenpakete, die zu den mehreren Empfängern verbreitet werden sollen, auf der Grundlage der empfangenen Informationen umfasst.

5. Verfahren nach Anspruch 4, wobei die Informationen des einen oder der mehreren Empfänger sich auf Folgendes beziehen:

- Informationen, die von dem einen oder den mehreren Empfängern als Ergebnis eines Verbreitens zu mehreren Zielen von Datenpaketen eines vorhergehenden Satzes ursprünglicher Datenpakete empfangen werden; und/oder
- Informationen, die von dem einen oder den mehreren Empfängern als Ergebnis weiterer Verbindungen des einen oder der mehreren Empfänger mit einer Basisstation, die die Zelle definiert, empfangen werden.

6. Verfahren nach einem oder mehreren der vorhergehenden Ansprüche, das ferner den Schritt des Empfangens von Informationen, die k - 1 Hinweise für k fehlende ursprüngliche Datenpakete des Satzes ursprünglicher Datenpakete umfassen, bei einem Empfänger der mehreren Empfänger nach dem Verbreiten der ursprünglichen Datenpakete und des einzelnen netzcodierten Datenpakets zu den mehreren Empfängern umfasst.

7. Verfahren nach Anspruch 6, das ferner den Schritt des Sendens von Folgendem zu dem Empfänger der mehreren Empfänger umfasst:

- k - 1 ursprüngliche Datenpakete, die den fehlenden k Datenpaketen im Satz ursprünglicher Datenpakete entsprechen, wobei die k - 1 Hinweise Informationen hinsichtlich der fehlenden ursprünglichen Datenpakete enthalten; und/oder
- k - 1 netzcodierte Datenpakete, die zu den mehreren Empfängern wahlweise verbreitet werden.

8. Übertragungsknoten (20) für ein Kommunikationssystem, der eine Zelle (21) eines Mobilkommunikationssystems definiert, wobei der Übertragungsknoten konfiguriert ist, mehrere ursprüngliche Datenpakete zu mehreren Empfängern (UE1, UE2, UE3) in der Zelle zu verbreiten und der Übertragungsknoten Folgendes umfasst:

einen Prozessor, der konfiguriert ist, einen Satz ursprünglicher Datenpakete und ein einzelnes netzcodiertes Datenpaket, die zu den mehreren Empfängern in der Zelle verbreitet werden sollen, zu definieren, und
einen Sender, der konfiguriert ist, den Satz ursprünglicher Datenpakete und das einzelne netzcodierte Datenpaket zu den mehreren Empfängern in der Zelle zu verbreiten; wobei
der Satz ursprünglicher Datenpakete aus einer Anzahl ursprünglicher Datenpakete der mehreren ursprünglichen Datenpakete besteht,
die Anzahl ursprünglicher Datenpakete im Satz ursprünglicher Datenpakete von einer Mehrzielverbreitungs-Datenpaketverlustwahrscheinlichkeit zum Senden von Datenpaketen zu einem oder mehreren der mehreren Empfänger in der Zelle abhängt,
das einzelne netzcodierte Datenpaket eine Linearkombination von zwei oder mehr ursprünglichen Datenpaketen im Satz ursprünglicher Datenpakete ist und
der Übertragungsknoten konfiguriert ist, das einzelne netzcodierte Datenpaket unter Verwendung einer Modulations- und Codierungsrate, die kleiner als die Modulations- und Codierungsrate, die zum Verbreiten zu mehreren Zielen des Satzes ursprünglicher Datenpakete verwendet wird, zu mehreren Zielen zu verbreiten.

9. Übertragungsknoten nach Anspruch 8, wobei das einzelne netzcodierte Datenpaket eine Linearkombination der ursprünglichen Datenpakete im Satz ursprünglicher Datenpakete wie z. B. eine bitweise exklusive ODER-Kombination sämtlicher Bits sämtlicher ursprünglicher Datenpakete ist.

10. Übertragungsknoten nach Anspruch 8 oder 9, wobei der Übertragungsknoten eine Basisstation ist, die die Zelle des Mobilkommunikationssystems definiert, und der Prozessor konfiguriert ist, die Anzahl ursprünglicher Datenpakete im Satz ursprünglicher Datenpakete in einer Basisstation des Mobilkommunikationssystems auf der Grundlage der Datenpaketverlustwahrscheinlichkeit zu bestimmen.

11. Übertragungsknoten nach einem oder mehreren der vorhergehenden Ansprüche 8-10, wobei der Übertragungsknoten einen Empfänger umfasst, der konfiguriert ist zum Empfangen von Informationen von einem oder mehreren Empfängern der mehreren Empfänger, und der Prozessor konfiguriert ist zum dynamischen Bestimmen der Mehrzielverbreitungs-Datenpaketverlustwahrscheinlichkeit für mindestens einen Satz ursprünglicher Datenpakete, die zu den mehreren Empfängern verbreitet werden sollen, auf der Grundlage der empfangenen Informationen.

12. Übertragungsknoten nach Anspruch 11, wobei die Informationen des einen oder der mehreren Empfänger sich auf Folgendes beziehen:

- Informationen, die von dem einen oder den mehreren Empfängern als Ergebnis eines Verbreitens zu mehreren Zielen von Datenpaketen eines vorhergehenden Satzes ursprünglicher Datenpakete empfangen werden; und/oder
- Informationen, die von dem einen oder den mehreren Empfängern als Ergebnis weiterer Verbindungen des einen oder der mehreren Empfänger mit einer Basisstation, die die Zelle definiert, empfangen werden.

13. Übertragungsknoten nach einem oder mehreren der vorhergehenden Ansprüche 8-12, wobei der Prozessor konfiguriert ist, Informationen, die k - 1 Hinweise für k fehlende ursprüngliche Datenpakete des Satzes ursprünglicher Datenpakete umfassen, bei einem Empfänger der mehreren Empfänger nach dem Verbreiten der ursprünglichen Datenpakete und des einzelnen netzcodierten Datenpakets zu den mehreren Empfängern zu verarbeiten.

14. Übertragungsknoten nach Anspruch 13, wobei der Prozessor konfiguriert ist, Folgendes zu bestimmen:

- k - 1 ursprüngliche Datenpakete, die den fehlenden k Datenpaketen im Satz ursprünglicher Datenpakete entsprechen, wobei die k - 1 Hinweise Informationen hinsichtlich der fehlenden ursprünglichen Datenpakete enthalten; und/oder
- k - 1 netzcodierte Datenpakete; wobei

der Übertragungsknoten konfiguriert ist, mindestens eines der k - 1 ursprünglichen Datenpakete oder der k - 1 netzcodierten Datenpakete wahlweise in einer Verbreitung zu mehreren Zielen zum Empfänger zu senden.

15. Computerprogramm oder Suite von Computerprogrammen, das bzw. die Befehle oder ein Computerprogrammprodukt, das Befehle speichert, umfasst, die bzw. das, wenn das Programm oder die Suite von Computerprogrammen durch ein Computersystem ausgeführt wird, das Computersystem veranlassen, das Verfahren nach einem oder mehreren der Ansprüche 1-8 auszuführen.

**Revendications**

1. Procédé de multidiffusion d'une pluralité de paquets de données d'origine vers une pluralité de récepteurs (UE1, UE2, UE3) dans une cellule (21) d'un système de communications cellulaires, le procédé comprenant dans le système de communications cellulaires les étapes de :

multidiffusion d'un ensemble (S1, S2, S3) de paquets de données d'origine et d'un paquet de données codé réseau unique (C1, C2, C3) associé à l'ensemble de paquets de données d'origine vers la pluralité de récepteurs dans la cellule,
dans lequel l'ensemble de paquets de données d'origine consiste en un nombre de paquets de données d'origine de la pluralité de paquets de données d'origine ;
dans lequel le nombre de paquets de données d'origine dans l'ensemble de paquets de données d'origine dépend d'une probabilité de perte de paquets de données de multidiffusion pour la transmission de paquets de données à un ou plusieurs de la pluralité de récepteurs dans la cellule,
dans lequel le paquet de données codé réseau unique est une combinaison linéaire de deux ou plusieurs paquets de données d'origine dans l'ensemble de paquets de données d'origine, et
dans lequel le paquet de données codé réseau est multidiffusé en utilisant un taux de modulation et de codage inférieur au taux de modulation et de codage utilisé pour la multidiffusion de l'ensemble de paquets de données d'origine.

2. Procédé selon la revendication 1, dans lequel le paquet de données codé réseau unique est une combinaison linéaire des paquets de données d'origine dans l'ensemble de paquets de données d'origine, telle qu'une combinaison OU EXCLUSIF binaire de chacun des bits de chacun des paquets de données d'origine.

3. Procédé selon la revendication 1 ou la revendication 2, comprenant en outre l'étape de détermination du nombre de paquets de données d'origine dans l'ensemble de paquets de données d'origine dans une station de base du système de communications cellulaires en fonction de la probabilité de perte de paquets de données.

**4.** Procédé selon une ou plusieurs des revendications précédentes, comprenant l'étape de réception d'informations depuis un ou plusieurs récepteurs de la pluralité de récepteurs et de détermination dynamique de la probabilité de perte de paquets de données de multidiffusion pour au moins un ensemble de paquets de données d'origine à multidiffuser vers la pluralité de récepteurs en fonction des informations reçues.

**5.** Procédé selon la revendication 4, dans lequel les informations provenant des un ou plusieurs récepteurs se rapportent au moins à :

- des informations reçues depuis les un ou plusieurs récepteurs résultant de la multidiffusion de paquets de données d'un ensemble précédent de paquets de données d'origine ; et
- des informations reçues depuis les un ou plusieurs récepteurs résultant d'autres connexions des un ou plusieurs récepteurs avec une station de base définissant la cellule.

**6.** Procédé selon une ou plusieurs des revendications précédentes, comprenant en outre l'étape de réception d'informations comprenant k-1 indications pour k paquets de données d'origine manquants de l'ensemble de paquets de données d'origine au niveau d'un récepteur de la pluralité de récepteurs après la multidiffusion des paquets de données d'origine et du paquet de données codé réseau unique vers la pluralité des récepteurs.

**7.** Procédé selon la revendication 6, comprenant en outre au moins une des étapes de transmission au récepteur de la pluralité de récepteurs de :

- k-1 paquets de données d'origine correspondant aux k paquets de données manquants dans l'ensemble de paquets de données d'origine, les k-1 indications contenant des informations concernant les paquets de données d'origine manquants ;
- k-1 paquets de données codés réseau, qui, facultativement, sont multidiffusés vers la pluralité de récepteurs.

**8.** Nœud de transmission (20) d'un système de communications, définissant une cellule (21) d'un système de communications cellulaires, le nœud de transmission étant configuré pour multidiffuser une pluralité de paquets de données d'origine vers une pluralité de récepteurs (UE1, UE2, UE3) dans la cellule, le nœud de transmission comprenant :

un processeur configuré pour définir un ensemble de paquets de données d'origine et un paquet de données codé réseau unique à multidiffuser vers la pluralité de récepteurs de la cellule, un émetteur configuré pour multidiffuser l'ensemble de paquets de données d'origine et le paquet de données codé réseau unique vers la pluralité de récepteurs dans la cellule ;
dans lequel l'ensemble de paquets de données d'origine consiste en un nombre de paquets de données d'origine de la pluralité de paquets de données d'origine,
dans lequel le nombre de paquets de données d'origine dans l'ensemble de paquets de données d'origine dépend d'une probabilité de perte de paquets de données de multidiffusion pour transmettre des paquets de données à un ou plusieurs de la pluralité de récepteurs dans la cellule,
dans lequel le paquet de données codé réseau unique est une combinaison linéaire de deux ou plusieurs paquets de données d'origine dans l'ensemble de paquets de données d'origine, et dans lequel le nœud de transmission est configuré pour multidiffuser le paquet de données codé réseau unique en utilisant un taux de modulation et de codage inférieur au taux de modulation et de codage utilisé pour la multidiffusion de l'ensemble de paquets de données d'origine.

**9.** Nœud de transmission selon la revendication 8, dans lequel le paquet de données codé réseau unique est une combinaison linéaire des paquets de données d'origine dans l'ensemble de paquets de données d'origine, telle qu'une combinaison OU EXCLUSIF binaire de chacun des bits de chacun des paquets de données d'origine.

**10.** Nœud de transmission selon la revendication 8 ou 9, le nœud de transmission étant une station de base définissant la cellule du système de communications cellulaires et dans lequel le processeur est configuré pour déterminer le nombre de paquets de données d'origine dans l'ensemble de paquets de données d'origine dans une station de base du système de communications cellulaires en fonction de la probabilité de perte de paquets de données multidiffusés.

**11.** Nœud de transmission selon une ou plusieurs des revendications précédentes 8 à 10, dans lequel le nœud de transmission comprend un récepteur configuré pour recevoir des informations depuis un ou plusieurs récepteurs de la pluralité de récepteurs et dans lequel le processeur est configuré pour déterminer dynamiquement la probabilité de perte de paquets de données multidiffusés pour au moins un ensemble de paquets de données d'origine à multidiffuser vers la pluralité de récepteurs en fonction des informations reçues.

12. Nœud de transmission selon la revendication 11, dans lequel les informations provenant des un ou plusieurs récepteurs se rapportent au moins à :

- des informations reçues depuis les un ou plusieurs récepteurs résultant de la multidiffusion de paquets de données d'un ensemble précédent de paquets de données d'origine ; et
- des informations reçues depuis les un ou plusieurs récepteurs résultant d'autres connexions des un ou plusieurs récepteurs avec une station de base définissant la cellule.

13. Nœud de transmission selon une ou plusieurs des revendications précédentes 8 à 12, dans lequel le processeur est configuré pour traiter des informations comprenant des k-1 indications pour k paquets de données d'origine manquants de l'ensemble de paquets de données d'origine au niveau d'un récepteur de la pluralité de récepteurs après la multidiffusion des paquets de données d'origine et du paquet de données codé en réseau unique vers la pluralité de récepteurs.

14. Nœud de transmission selon la revendication 13, dans lequel le processeur est configuré pour déterminer au moins

- k-1 paquets de données d'origine correspondant aux k paquets de données manquants dans l'ensemble de paquets de données d'origine, les k-1 indications contenant des informations concernant les paquets de données d'origine manquants ;
- k-1 paquets de données codés en réseau ;

et dans lequel le nœud de transmission est configuré pour transmettre au moins les k-1 paquets de données d'origine et/ou les k-1 paquets de données codés en réseau, facultativement en multidiffusion, au récepteur.

15. Programme d'ordinateur ou suite de programmes d'ordinateur comprenant des instructions ou produit de programme d'ordinateur stockant des instructions qui, quand le programme ou la suite de programmes d'ordinateur sont exécutés par un système informatique, amènent le système informatique à mettre en œuvre le procédé selon l'une ou plusieurs des revendications 1 à 8.

EP 3 391 565 B1

**FIG. 1**

20

UE1 21

UE2

UE3

**FIG. 2**

Determine multicast data packet loss probability — S30

Define set size of set S in dependence of loss probability — S31

Generate network coded data packet for set S — S32

Multicast set S and network coded data packet — S33

Receive feedback from UE's for set S — S34

S35

Send repair packet(s) R to UE(s)

**FIG. 3**

FIG. 4

**FIG. 6**

Transmission node · UE1 · UE2 · UE3

S60
S61
S62 — S1+C1
S63 — S2+C2
S64 — R(C2')
S65
S66 — S3+C3
S67

**FIG. 5**

Transmission node · UE1 · UE2 · UE3

S50
S51 — S1+C1
S52 — R
S53
S54 — S2+C2
S55
S56 — S3+C3
S57

FIG. 7

EP 3 391 565 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6278716 B

- WO 2009131979 A

**Non-patent literature cited in the description**

- Comparison of Unicast and SC-PTM on radio efficiency. *3GPP TSG-RAN WG2 #89bis, R2-151395*
- **TUAN TRAN THAI et al.** *Joint On-the-Fly Network Coding/Video Quality Adaptation for Real-Time Delivery*

- Network Architecture. *3GPP Technical Specification TS 23.002*
- GPRS enhancements for Evolved Universal Terrestrial Radio Access Network (E-UTRAN) access. *3GPP Technical Specification TS 23.401*